# EUROPÄISCHE PATENTSCHRIFT

(11) **EP 1 754 798 B1**
(45) Veröffentlichungstag und Bekanntmachung des Hinweises auf die Patenterteilung: **17.06.2009**
(21) Anmeldenummer: 05018015.7
(22) Anmeldetag: 18.08.2005
(51) Int. Cl.: C22C 38/22, F16B 33/00

(54) **Schraube für ein Turbinengehäuse**
Screw for a turbine housing
Vis pour un carter de turbine

(43) Veröffentlichungstag der Anmeldung: 21.02.2007
(73) Patentinhaber: SIEMENS AKTIENGESELLSCHAFT, 80333 München (DE)
(72) Erfinder: Kern, Torsten-Ulf, Dr., 46485 Wesel (DE); Meisenburg, Frank, 45472 Mülheim an der Ruhr (DE); Schwass, Gerhard, 45472 Mülheim an der Ruhr (DE); Thamm, Norbert, 45133 Essen (DE); de Lazzer, Armin, Dr., 45479 Mülheim an der Ruhr (DE)

(56) Entgegenhaltungen:
- EP-A- 0 866 145
- WO-A-00/00750
- DE-A1- 3 522 114
- T. U. KERN, F. SCHMITZ, W. STAMM: "Material development for high temperature-stressed components of turbomachines" STAINLESS STEEL WORLD, Oktober 1998 (1998-10), Seiten 19-27, XP009059714

## Beschreibung

Die Erfindung betrifft eine Schraube zum Verbinden eines ersten Gehäuseteils einer Dampf- oder Gasturbine mit einem zweiten Gehäuseteil der Turbine. Die Erfindung betrifft ferner ein Turbinengehäuse für eine Dampf- oder Gasturbine mit einem ersten Gehäuseteil und einem zweiten Gehäuseteil, sowie einer derartigen Schraube zum Verbinden der beiden Gehäuseteile in einem flanschartigen Teilfugenbereich der Gehäuseteile. Darüber hinaus betrifft die Erfindung eine Turbine für ein thermisches Kraftwerk mit einem derartigen Turbinengehäuse. Unter Turbinengehäuse wird hier das Innengehäuse der Dampf- oder Gasturbine verstanden, das in der Regel von einem Außengehäuse umgeben ist.

Beim Betrieb einer Dampfturbine werden möglichst hohe Dampfzustände angestrebt. Das heißt es wird angestrebt, die Dampfturbine bei möglichst hohen Dampfdrücken mit sehr hohen Dampftemperaturen zu betreiben. Dabei werden zur Verbindung zweier Gehäuseteile der Dampfturbine eingesetzte Schrauben hohen Spannungen bei gleichzeitig herrschenden hohen Temperaturen ausgesetzt. Im Stand der Technik werden diese Schrauben daher aus hochwarmfestem Werkstoff gefertigt. Dabei werden Legierungen unterschiedlicher Zusammensetzungen als Schraubenwerkstoff verwendet. Die im Stand der Technik verwendeten Schrauben sind jedoch lediglich bei Turbinengehäusen verwendbar, die auf relativ geringe Druckdifferenzen von weniger als 250 bar ausgelegt sind. Auf höhere Druckdifferenzen ausgelegte Dampfturbinen sind teilweise mit speziellen einteiligen Einströmgehäusen ohne Verschraubung versehen. Bei anderen im Stand der Technik bekannten Dampfturbinen ist ein häufiges Schraubennachziehen und damit ein Öffnen der Turbine schon nach relativ kurzer Betriebszeit, nämlich eventuell schon nach 30000 Stunden anstatt 100.000 Stunden Betriebszeit notwendig.

DE 3 522 114 A1 offenbart einen hitzebeständigen 12--Cr-Stahl für Bolzen von Dampfturbinen.

Eine der Erfindung zugrundeliegende Aufgabe besteht darin, eine Turbine mit einer Schraube der eingangs genannten Art dahingehend zu verbessern, dass die Schraube auch bei hohen Druckdifferenzen, insbesondere bei Druckdifferenzen von über 250 bar sowie hohen Temperaturen des Strömungsmediums zum Verbinden eines ersten Gehäuseteils mit einem zweiten Gehäuseteil der Turbine eingesetzt werden kann.

Diese Aufgabe ist erfindungsgemäß mit einer gattungsgemäßen Schraube gemäß den Merkmalen des Anspruchs 1 gelöst. Die Aufgabe ist ferner mit einem Turbinengehäuse für eine Dampf- oder Gasturbine gelöst, das mit einer derartigen erfindungsgemäßen Schraube versehen ist. Darüber hinaus ist die Aufgabe mit einer Turbine für ein thermisches Kraftwerk mit einem derartigen Turbinengehäuse gelöst.

Durch den Einsatz des erfindungsgemäßen Werkstoffes weist die Schraube eine derartige Festigkeit auf, dass sie bei hohen Druckdifferenzen von über 250 bar sowie hohen Temperaturen zur Verbindung zweier Gehäuseteile verlässlich verwendet werden kann. Ein frühzeitiges Schraubennachziehen ist nicht notwendig. Der bei der erfindungsgemäßen Schraube verwendete Werkstoff weist im Vergleich mit im Stand der Technik bekannten Schraubenwerkstoffen höhere Ausgangsfestigkeit, höheren Schraubenanzug und somit höhere Relaxationsendspannungen auf. Die erfindungsgemäße-Schraube ermöglicht den Bau einer K-Turbine (Kombination aus Hochdruck- und Mitteldruckturbinenzylinder in einem einzigen Gehäuse) für ultrasuperkritische Dampfzustände (300 bar/600°C). Auch beim Einsatz in anderen Dampfturbinen, wie etwa Hochdruck-, Mitteldruck-, oder einge häusigen Mitteldruck- und Niederdruckdampfturbinen ergeben sich Verbesserungspotentiale in der Neuentwicklung.

In bevorzugter Ausführungsform ist die Schraube als Teilfugenschraube ausgebildet, die das erste Gehäuseteil mit dem zweiten Gehäuseteil in einem flanschartigen Teilfugenbereich verbindet. Die Teilfugenschraube kann als Bolzenschraube oder auch als durchgehende Schraube ausgeführt sein. Um die Festigkeit der Schraube bei hohen Dampfzuständen zu gewährleisten, ist es vorteilhaft, wenn der Werkstoff der Schraube im Temperaturbereich von 400°C bis 500°C festigkeitsoptimiert ist, insbesondere mit einer Festigkeit Rpo, 2 von mindestens 800 MPa qualifiziert ist. D.h., die Dehngrenze einer plastischen Verformung von 0,2% wird beim Werkstoff der Schraube erst bei Beanspruchung von 800 MPa bei Raumtemperatur erreicht. Eine Schraubenvorspannung kann zusätzlich zu Erhöhung der Relaxationsendspannung als Variable berücksichtigt werden. Weiterhin ist es zur zweckgemäßen Verwendung der Schraube vorteilhaft, wenn deren Werkstoff auf die folgenden Parameter bei Raumtemperatur optimiert ist: Zugfestigkeit ≤ 1100 N/mm², Dehnung (l₀ = 5d) ≥ 14%, Einschnürung ≥ 40%, Kerbschlagarbeit ≥ 30 J, sowie FATT ≤ +50°C.

Um insbesondere die vorgenannten Materialparameter, wie etwa die angestrebte Festigkeit bei 400°C bis 500°C zu erreichen, ist es vorteilhaft, wenn die Herstellung der Schraube die folgenden Schritte umfasst: Erschmelzen der Werkstoffbestandteile, Vorwärmebehandeln und Weiterverarbeiten der Schmelze zum Rundprofil sowie Vergütungsbehandeln des Rundprofils mit Anlassparameter von T ≤ 680°C. Bei der Erschmelzung ist es vorteilhaft, ESU-Stahl zu verwenden und durchgreifend zu verschmieden. Die Vergütungsbehandlung wird vorzugsweise als Ölvergütung ausgeführt. Über die gesamte Außenfläche der Schraube sollte eine vollständige Umwandlung in der Martensitstufe erfolgen. Die Abschrecktemperatur sollte zwischen 1050°C und 1100°C liegen. Vorteilhafterweise kann eine zweifache Anlassbehandlung durchgeführt werden, wobei dann folgendes zu beachten ist: Für das erste Anlassen wird zweckmäßigerweise eine Temperatur von 570°C verwendet. Die Temperatur der zweiten Anlassbehandlung sollte über der der ersten Anlassbehandlung liegen.

In zweckmäßiger Ausführungsform weist die Schraube den Werkstoff X12CrMoWVNb10-1-1 auf. Insbesondere besteht die Schraube zu 100% aus diesem Werkstoff. Durch Verwendung dieses Werkstoffs wird die Schraube bezüglich ihrer Festigkeit bei hohen Dampftemperaturen verbessert, sodass sie zum Verbinden zweier Gehäuseteile einer entsprechenden Dampfturbine bei hohen Dampfzuständen optimal geeignet ist.

Um die Werkstoffeigenschaften der Schraube weiter zu optimieren ist es vorteilhaft, wenn der für die Schraube verwendete Werkstoff X12CrMoWVNbN10-1-1 das chemische Element Mo mit einem relativen Anteil von 1,0 bis 1,1 Gewichts-%, das chemische Element Ni, insbesondere mit einem relativen Anteil von 0,20 bis 0,80 Gewichts-% und/oder das chemische Element W mit einem relativen Anteil von 0,50 bis 3,00 Gewichts-% aufweist.

Darüber hinaus ist es vorteilhaft, wenn die Schraube den Werkstoff X12CrMoVNbN10-1 aufweist, in dem das chemische Element Mo mit einem relativen Anteil von 1,4 bis 1,6 Gewichts-%, sowie das chemische Element Ni mit einem relativen Anteil von 0,20 bis 0,65 Gewichts-% enthalten ist, aufweist, insbesondere zu 100% daraus besteht. Die Verwendung dieses Werkstoffs verbessert das Festigkeitsverhalten der Schraube gegenüber den im Stand der Technik bekannten Schrauben bei hohen Dampfzuständen erheblich.

Ein Werkstoff mit der beanspruchten Zusammensetzung weist verbesserte Eigenschaften bezüglich Festigkeit, Zugfestigkeit, Dehnung, Einschnürung, Kerbschlagarbeit und/oder FATT auf. Damit verbessert sich die Eignung der aus diesem Werkstoff gefertigten Schraube zur Verbindung zweier Gehäuseteile einer mit hohen Dampfzuständen beaufschlagten Dampfturbine entsprechend. Um die Brauchbarkeit der Schraube bei hohen Dampfzuständen langzeitig weiter zu erhöhen, ist es vorteilhaft, wenn der als Schraube verwendete Werkstoff die chemischen Elemente Si, Mn, P und Sn so enthält, dass das Produkt der Summe der relativen Anteile von Si und Mn und der Summe der relativen Anteile von P und Sn [(Si+Mn)·(P+Sn)] kleiner als 70·10⁻⁴ ist. Vorteilerhafterweise sind die Gehalte der Spurenelemente Cu, As, Sb und Sn so niedrig wie möglich einzustellen.

Nachfolgend wird ein Ausführungsbeispiel einer erfindungsgemäßen Schraube anhand der beigefügten schematischen Zeichnung näher erläutert.

Diese zeigt eine Schnittansicht eines flanschartigen Teilfugenbereichs eines Turbinengehäuses mit einer Teilfugenschraube.

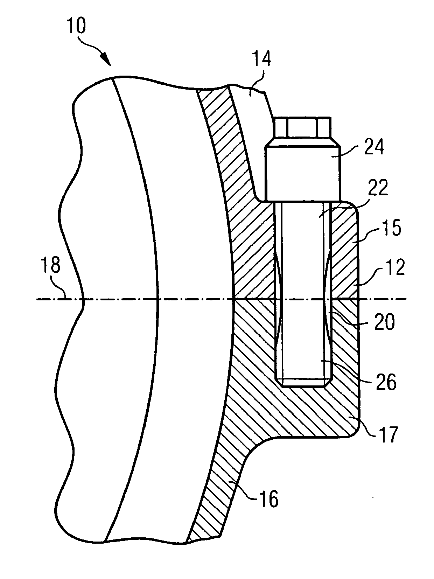

Die Figur zeigt einen Ausschnitt eines Turbinengehäuses 12 einer Dampfturbine 10 im Bereich einer Teilfuge 18. Mit Turbinengehäuse 12 ist hier das Innengehäuse der Dampfturbine 10 bezeichnet, das von einem Außengehäuse umgeben ist. Das Turbinengehäuse 12 weist ein oberes oder erstes Gehäuseteil 14 und ein unteres oder zweites Gehäuseteil 16 auf. Die Teilfuge 18 befindet sich zwischen dem ersten Gehäuseteil 14 und dem zweiten Gehäuseteil 16. Im Bereich der Teilfuge 18 ist das erste Gehäuseteil 14 und das zweite Gehäuseteil 16 flanschartig ausgebildet. Ein Gehäuseflansch 15 des ersten Gehäuseteils 14 sowie ein Gehäuseflansch 17 des zweiten Gehäuseteils 16 sind mit einer Schraubenbohrung 20 mit Innengewinde versehen.

Die Schraubenbohrung 20 ist zur Aufnahme einer Teilfugenschraube 22 ausgebildet. Dabei erstreckt sich die Schraubenbohrung 20 vollständig durch den Gehäuseflansch 15 des ersten Gehäuseteils 14 und teilweise in dem Gehäuseflansch 17 des zweiten Gehäuseteils 16. Die Teilfugenschraube 22 kann von oben her d.h. von der Oberseite des Gehäuseflansches 15 des ersten Gehäuseteils 14 her in die Schraubenbohrung 20 eingeschraubt werden. Die Teilfugenschraube 22 ist in dem vorliegenden Beispiel als Sechskantschraube ausgeführt und weist einen Schraubenkopf 24 sowie einen Schraubenschaft 26 mit einem an das Innengewinde der Schraubenbohrung 20 angepassten Außengewinde auf. In der in der Figur gezeigten vollständig in die Schraubenbohrung 20 eingeschraubten Stellung der Teilfugenschraube 22 stellt diese eine feste Verbindung zwischen dem ersten Gehäuseteil 14 und dem zweiten Gehäuseteil 16 über die jeweiligen Gehäuseflansche 15 und 17 her. Die Teilfugenschraube 22 kann neben der in der Figur gezeigten Gestaltungsform auch in verschiedenen anderen Gestaltungsformen ausgeführt sein. Zum Beispiel kann die Teilfugenschraube 22 auch als Bolzenschraube mit entsprechenden Schraubenmuttern an ihren jeweiligen Stirnseiten ausgebildet sein.

Die Teilfugenschraube 22 besteht aus dem Werkstoff X12CrMoWVNbN10-1-1 und ist als Schraubenwerkstoff im Temperaturbereich von 400°C bis 500°C in einer erhöhten Festigkeit von Rpo, 2 > 800 MPa bei Raumtemperatur qualifiziert.

Die chemische Zusammensetzung des Werkstoffs der Teilfugenschraube 22 besteht aus den folgenden chemischen Elementen:
C: 0,11 bis 0,14 Gewichts-%
Si: ≤ 0,12 Gewichts-%
Mn: 0,40 bis 0,50 Gewichts-%
P: ≤ 0,010 Gewichts-%
S: ≤ 0,005 Gewichts-%
Cr: 9,0 bis 10,6 Gewichts-%
Mo: 1,0 bis 1,1, Gewichts-%
Ni: 0,20 bis 0,80 Gewichts-%
W: 0,50 bis 1,00 Gewichts-%
V: 0,15 bis 0,25 Gewichts-%
Al_{ges}: ≤ 0,010 Gewichts-%
N: 0,045 bis 0,060 Gewichts-%
Nb: 0,04 bis 0,06 Gewichts-%

Dabei wird ein J-Wert [J = (Si+Mn)·(P+Sn)·10⁴] von < 70 angestrebt. Die Gehalte der Spurenelemente Cu, As, Sb und Sn sind so niedrig wie möglich einzustellen.

## Patentansprüche

1. Schraube zum Verbinden eines ersten Gehäuseteils (14) einer Dampf- oder Gasturbine (10) mit einem zweiten Gehäuseteil (16) der Turbine (10), wobei die Schraube (22) aus einem Werkstoff gefertigt ist, der folgende Zusammensetzung aufweist:
(Mo + 0,5 W): 1,3 bis 1,7 Gewichts-%,
C: 0,11 bis 0,14 Gewichts-%,
Si: höchstens 0,12 Gewichts-%,
Mn: 0,40 bis 0,50 Gewichts-%,
P: höchstens 0,010 Gewichts-%,
S: höchstens 0,005 Gewichts-%,
Cr: 9,0 bis 10,6 Gewichts-%,
V: 0,15 bis 0,25 Gewichts-%,
A1: höchstens 0,010 Gewichts-%,
N: 0,045 bis 0,060 Gewichts-% und/oder
Nb: 0,04 bis 0,06 Gewichts-%, wahlweise
Ni: 0.20 bis 0.80 Gewichts-% und
Fe: Rest.

2. Schraube nach Anspruch 1,
**dadurch gekennzeichnet, dass**
die Schraube (22) als Teilfugenschraube (22) ausgebildet ist, die das erste Gehäuseteil (14) mit dem zweiten Gehäuseteil (16) in einem flanschartigen Teilfugenbereich verbindet (15, 17).

3. Schraube nach Anspruch 1 oder 2,
**dadurch gekennzeichnet, dass**
der Werkstoff der Schraube (22) im Temperaturbereich von 400°C bis 500°C festigkeitsoptimiert ist,
insbesondere mit einer Festigkeit Rpo,2 von mindestens 800 MPa bei Raumtemperatur qualifiziert ist.

4. Schraube nach einem der vorausgehenden Ansprüche,
**dadurch gekennzeichnet, dass**
die Herstellung der Schraube (22) die folgenden Schritte umfasst:
Erschmelzen der Werkstoffbestandteile, Vorwärmebehandeln und Weiterverarbeiten der Schmelze zum Rundprofil sowie Vergütungsbehandeln des Rundprofils mit Anlassparametern von T ≤ 680 °C.

5. Schraube nach einem der vorausgehenden Ansprüche,
**dadurch gekennzeichnet, dass**
die Schraube (22) aus dem Werkstoff X12CrMoWVNbN10-1-1 besteht.

6. Schraube nach Anspruch 5,
**dadurch gekennzeichnet, dass**
der in der Schraube (22) enthaltene Werkstoff X12CrMoWVNbN10-1-1 das chemische Element Mo mit einem relativen Anteil von 1,0 bis 1,1 Gewichts-%, das chemische Element Ni, insbesondere mit einem relativen Anteil von 0,20 bis 0,80 Gewichts-% und/oder das chemische Element W mit einem relativen Anteil von 0,50 bis 3,0 Gewichts-% aufweist.

7. Schraube nach einem der vorausgehenden Ansprüche,
**dadurch gekennzeichnet, dass**
die Schraube (22) aus dem Werkstoff X12CrMoVNbN10-1, in dem das chemische Element Mo mit einem relativen Anteil von 1,4 bis 1,6 Gewichts-% sowie das chemische Element Ni mit einem relativen Anteil von 0,20 bis 0,65 Gewichts-% enthalten ist, besteht.

8. Schraube nach einem der vorausgehenden Ansprüche,
**dadurch gekennzeichnet, dass**
der als Schraube (22) verwendete Werkstoff die chemischen Elemente Si, Mn, P und Sn so enthält, dass das Produkt aus der Summe der relativen Anteile von Si und Mn und der Summe der relativen Anteile von P und Sn [(Si+Mn)·(P+Sn)] kleiner als 70·10⁻⁴ ist.

9. Turbinengehäuse für eine Dampf- oder Gasturbine mit einem ersten Gehäuseteil (14) und einem zweiten Gehäuseteil (16) sowie einer Schraube (22) nach einem der vorausgehenden Ansprüche zum Verbinden der beiden Gehäuseteile (14, 16) in einem flanschartigen Teilfugenbereich (15, 17) der Gehäuseteile (14, 16).

10. Turbine für ein thermisches Kraftwerk mit einem Turbinengehäuse nach Anspruch 9.

## Claims

1. Bolt for connecting a first casing part (14) of a steam or gas turbine (10) to a second casing part (16) of the turbine (10), wherein the bolt (22) is produced from a material having the following composition:
(Mo + 0.5 W): 1.3 to 1.7% by weight,
C: 0.11 to 0.14% by weight,
Si: at most 0.12% by weight,
Mn: 0.40 to 0.50% by weight,
P: at most 0.010% by weight,
S: at most 0.005% by weight,
Cr: 9.0 to 10.6% by weight,
V: 0.15 to 0.25% by weight,
A1: at most 0.010% by weight,
N: 0.045 to 0.060% by weight and/or
Nb: 0.04 to 0.06% by weight, optionally
Ni: 0.20 to 0.80% by weight and
Fe: remainder.

2. Bolt according to Claim 1,
**characterized in that**
the bolt (22) is embodied as a casing joint bolt (22) which connects the first casing part (14) to the second casing part (16) in a flange-like casing joint area (15, 17) .

3. Bolt according to Claim 1 or 2,
**characterized in that**
the material of the bolt (22) is optimized in terms of strength in the temperature range of from 400°C to 500°C, in particular is qualified with a strength R_{p0.2} of at least 800 MPa at room temperature.

4. Bolt according to one of the preceding claims,
**characterized in that**
the bolt (22) is produced by the following steps: melting the material constituents, pre-heat-treating and further-processing the melt to form the round profile and quenching and tempering the round profile at tempering parameters of T ≤ 680°C.

5. Bolt according to one of the preceding claims,
**characterized in that**
the bolt (22) consists of the material X12CrMoWVNbN10-1-1.

6. Bolt according to Claim 5,
**characterized in that**
the material X12CrMoWVNbN10-1-1, which is present in the bolt (22), comprises the chemical element Mo with a relative proportion of from 1.0 to 1.1% by weight, the chemical element Ni, in particular with a relative proportion of from 0.20 to 0.80% by weight and/or the chemical element W with a relative proportion of from 0.50 to 3.0% by weight.

7. Bolt according to one of the preceding claims,
**characterized in that**
the bolt (22) consists of the material X12CrMoVNbN10-1, which comprises the chemical element Mo with a relative proportion of from 1.4 to 1.6% by weight and the chemical element Ni with a relative proportion of from 0.20 to 0.65% by weight.

8. Bolt according to one of the preceding claims,
**characterized in that**
the material used as the bolt (22) comprises the chemical elements Si, Mn, P and Sn in such a way that the product of the sum of the relative proportions of Si and Mn and the sum of the relative proportions of P and Sn [(Si+Mn)·(P+Sn)] is less than 70·10⁻⁴.

9. Turbine casing for a steam or gas turbine having a first casing part (14) and a second casing part (16) and a bolt (22) according to one of the preceding claims for connecting the two casing parts (14, 16) in a flange-like casing joint area (15, 17) of the casing parts (14, 16).

10. Turbine for a thermal power plant having a turbine casing according to Claim 9.

## Revendications

1. Vis pour assembler une première partie (14) de carter d'une turbine (10) à vapeur ou à gaz à une deuxième partie (16) de carter de la turbine (10), la vis (22) étant en un matériau qui a la composition suivante :
(Mo + 0,5 W) : de 1,3 à 1,7 % en poids,
C : de 0,11 à 0,14 % en poids,
S : au plus 0,12 % en poids,
M : de 0,40 à 0,50 % en poids,
P : au plus 0,010 % en poids,
S : au plus 0,005 % en poids,
Cr : de 9,0 à 10,6 % en poids,
V : de 0,15 à 0,25 % en poids,
Al : au plus 0,010 % en poids,
N : de 0,045 à 0,060 % en poids et/ou
Nb : de 0,04 à 0,06 % en poids, éventuellement
Ni : de 0,20 à 0,80 % en poids et
Fe : le reste.

2. Vis suivant la revendication 1,
**caractérisée en ce que**,
la vis (22) est constituée en vis (22) de joint partiel qui assemble (15, 17) la première partie (14) du carter à la deuxième partie (16) du carter dans une zone de joint partiel du type à bride.

3. Vis suivant la revendication 1 ou 2,
**caractérisée en ce que** le matériau de la vis (22) est optimisé du point de vue de la résistance dans le domaine de température allant de 400°C à 500°C,
et est qualifié notamment en ayant une résistance Rp 0,2 d'au moins 800 Mpa à la température ambiante.

4. Vis suivant l'une des revendications précédentes,
**caractérisée en ce que** la fabrication de la vis (22) comprend les stades suivantes :
on fait fondre les constituants du matériau, on effectue un préchauffage et on retransforme la masse fondue en le profilé circulaire, puis on effectue un traitement thermique du profil circulaire avec des paramètres de recuit de T ≤ 680°C.

5. Vis suivant l'une des revendications précédentes,
**caractérisé en ce que** la vis est en le matériau X12CrMoWVNbN10-1-1.

6. Vis suivant la revendication 5,
**caractérisée en ce que** le matériau X12CrMoWVNbN10-1-1 contenu dans la vis (22) a l'élément chimique Mo en une proportion relative de 1,0 à 1,1 % en poids, l'élément chimique Ni, notamment en une proportion relative de 0,20 à 0,80 % en poids et/ou l'élément chimique W en une proportion relative de 0,50 à 3,0 % en poids.

7. Vis suivant l'une des revendications précédentes,
**caractérisée en ce que** la vis est en le matériau X12CrMoVNbN10-1, dans lequel l'élément chimique Mo est contenu dans une proportion relative de 1,4 à 1,6 % en poids et l'élément chimique Ni en une proportion relative de 0,20 à 0,65 % en poids.

8. Vis suivant l'une des revendications précédentes, **caractérisée en ce que** le matériau utilisé comme vis (22) contient les éléments chimiques Si, Mn, P et Sn de sorte que le produit de la somme des proportions relatives de Si et Mn par la somme des proportions relatives de P et de Sn [(Si+Mn) · (P+Sn)] est plus petit que 70.10⁻⁴.

9. Carter de turbine pour une turbine à vapeur ou une turbine à gaz ayant une première partie (14) de carter et une deuxième partie (16) de carter, ainsi qu'une vis (22) suivant l'une des revendications précédentes d'assemblage des deux parties (14, 16) de carter dans une zone (15, 17) de joint partiel du type à bride des parties (14, 16) de carter.

10. Turbine pour une centrale thermique ayant un carter de turbine suivant la revendication 9.
